# EUROPÄISCHE PATENTSCHRIFT

(11) **EP 0 469 657 B1**
(45) Veröffentlichungstag und Bekanntmachung des Hinweises auf die Patenterteilung: **17.08.1994**
(21) Anmeldenummer: 91201731.6
(22) Anmeldetag: 04.07.1991
(51) Int. Cl.: B01D 71/38, B01D 69/12, B01D 67/00, B01D 61/36

(54) **Mehrschichtige Membran und Verfahren zu ihrer Herstellung**
Multilayer membrane and production thereof
Membrane multicouche et son procédé de fabrication

(30) Priorität: 02.08.1990 DE 4024517
(43) Veröffentlichungstag der Anmeldung: 05.02.1992
(73) Patentinhaber: METALLGESELLSCHAFT Aktiengesellschaft, 60015 Frankfurt (DE)
(72) Erfinder: Hänel, Peter, Dr., W-6368 Bad Vilbel (DE); Helmrich, Harald, Dr., W-6000 Frankfurt am Main (DE)

(56) Entgegenhaltungen:
- EP-A- 0 047 953
- EP-A- 0 096 339
- EP-A- 0 114 286
- EP-A- 0 274 387
- EP-A- 0 307 636
- FR-A- 2 406 469
- US-A- 3 035 060
- PATENT ABSTRACTS OF JAPAN vol. 3, no. 114 (C-59)21. September 1979 & JP-A-54 095 982 ( NITTO DENKI ) 28. Juli 1979
- PATENT ABSTRACTS OF JAPAN vol. 10, no. 31 (C-327)(2088) 6. Februar 1986 & JP-A-60 183 009 ( TORAY K.K. ) 18. September 1985
- Polyvinylalcohol; properties and applications by C.A. FINCH London, Wiley 1973; Seiten 92, 93, 124, 351-352

## Beschreibung

Die Erfindung bezieht sich auf eine mehrschichtige Membran, die aus einer Trägerschicht, einer porösen Stützschicht und einer Trennschicht zusammengesetzt ist sowie auf ein Verfahren zur Herstellung dieser Membran.

In dem Dokument EP-A-0 442 557 (veröffentlicht am 21.08.91) wurde eine mehrschichtige Membran vorgeschlagen, die aus einer Trägerschicht, einer porösen Stützschicht und einer Trennschicht zusammengesetzt ist, wobei die Trägerschicht aus Polyamid-, Polyvinylidendifluorid-, Polyester- und Glasfasern, die poröse Stützschicht aus einem Polysulfon, Polyimid, Polyvinylalkohol, Polyurethan, Polyvinylidendifluorid, Polyäthersulfon, Polyacrylnitril oder Polyätherimid und die Trennschicht aus Polyvinylalkohol besteht und wobei die Trennschicht porenfrei ist sowie eine geordnete Struktur mit großen mikrokristallinen Anteilen aufweist, deren Kristallite im Röntgenbeugungsdiagramm bei einem Beugungswinkel 2 O von 19,6° bis 20° einen Reflex aufweisen, der eine Breite von 1,2° bis 1,5° hat. In dem Dokument EP-A-0 442 557 wird ferner ein Verfahren zur Herstellung dieser mehrschichtigen Membran vorgeschlagen, bei dem aus der Trägerschicht und der porösen Stützschicht zunächst ein Verbundmaterial hergestellt wird, bei dem dann auf die Stützschicht des Verbundmaterials eine Lösung aufgebracht wird, die 1 bis 10 Gew.-% Polyvinylalkohol und Rest Wasser enthält und die vor ihrer Verwendung 3 bis 20 Tage bei -10 bis +10°C gelagert wird und bei dem schließlich das mit der wäßrigen Polyvinylalkohol- Lösung beschichtete Verbundmaterial bei 100 bis 180°C während einer Zeit von 1 bis 60 Minuten behandelt wird.

Obwohl die in dem Dokument EP-A-0 442 557 vorgeschlagene Membran eine hohe und konstante Trennleistung besitzt, mußte versucht werden, die Trennleistung der Membran bei hoher Selektivität zu steigern. Der Erfindung liegt daher die Aufgabe zugrunde, eine Membran der eingangs genannten Art zu schaffen, die bei hoher Selektivität eine gegenüber den bekannten Membranen verbesserte Trennleistung hat. Der Erfindung liegt ferner die Aufgabe zugrunde, ein Verfahren zur Herstellung dieser Membran bereitzustellen.

Ausgehend von einer mehrschichtigen Membran, die aus einer Trägerschicht, einer porösen Stützschicht und einer Trennschicht zusammengesetzt ist, wird die der Erfindung zugrundeliegende Aufgabe dadurch gelöst, daß die Trägerschicht aus Polyamid-, Polyvinylidendifluorid-, Polyester- oder Glasfasern, daß die poröse Stützschicht aus einem Polysulfon, Polyimid, Polyvinylalkohol, Polyurethan, Polyvinylidendifluorid, Polyäthersulfon, Polyacrylnitril oder Polyätherimid und daß die Trennschicht aus einem modifizierten Polyvinylalkohol besteht und porenfrei ist, wobei der Polyvinylalkohol mit 5 bis 20 Gew.-% eines Polyvinylesters oder eines Polyvinyläthers modifiziert ist und dadurch hergestellt wird, daß man auf das Verbundmaterial von Trägerschicht und poröser Stützschicht eine 1 - 10 gew.-%ige wäßrige Lösung des modifizierten Polyvinylalkohols aufbringt, die vor ihrer Verwendung 3 - 20 Tage bei -10 bis +20°C gelagert wird. Die erfindungsgemäße Membran hat bei hoher Selektivität eine sehr hohe Trennleistung, die auch im Dauerbetrieb konstant ist.

Aus der EP-A-0 096 339 ist bereits eine Kompositmembran mit einer porenfreien Trennschicht aus einem ersten Polymer und einer porösen Stützschicht aus einem zweiten Polymer bekannt, wobei die porenfreie Trennschicht aus vernetztem Polyvinylalkohol besteht und wobei das für die Trennschicht der Membran verwendete Polymer nicht in die Poren der Stützschicht eingedrungen ist. Nach der EP-A-0 096 339 wird ein Polyvinylalkohol mit möglichst hohem Verseifungsgrad verwendet, z.B. mit einem Verseifungsgrad von über 98 oder über 99%. Hierbei sind die Molekulargewichte nicht kritisch, sofern nur Filmbildung bzw. Membranbildung gewährleistet ist. Übliche Molekulargewichte sollen im Bereich von 15.000 bis 200.000 Dalton liegen. Sowohl aus dem Dokument EP-A-0 307 636 als auch aus den Dokumenten JP-A-60 183 009 oder JP-A-54 095 983 sind mehrschichtige Membranen bekannt, deren Trennschicht aus Polyvinylalkohol-Polyvinylester-Copolymeren bestehen.
Weiterhin offenbart das Dokument EP-A-0 274 387 Membranen, deren Trennschicht aus einem polyvinylalkohol-Copolymeren besteht, wobei allerdings durch den Einsatz von Phosphor enthaltenden Säuren Mikroporen in dieser Trennschicht beim Herstellungsprozeß erzeugt werden. Keinem dieser Dokumente ist ein Hinweis darauf zu entnehmen, daß die Lagerung des die Trennschicht bildenden Polymers eine Bedeutung für die Eigenschaften der erhaltenen Membranen besitzt.

Aus dem Dokument FR-A-2 406 469 ist zwar die Reifung von Polymeren zur Herstellung einer antisotropen Membran bekannt, es wird unter Reifung jedoch eine Veränderung des Polymerisationsgrades durch Depolymerisation oder Repolymerisation verstanden. Bekannt ist auch aus `Polyvinyl alcohol; properties and applications' von Finch, C.A., London, Wiley 1973, Seiten 351 und 352, daß durch eine Veränderung des Hydrolysegrades eines Polyvinylalkoholfilms die Trenneigenschaften einer Membran aus Polyvinylalkohol in Bezug auf die Selektivität und den Permeatfluß verändert werden kann.
Es wurde nun aber gefunden, daß eine Trennschicht, die aus Polyvinylalkohol besteht, der 5 bis 20% eines Polyvinylesters oder eines Polyvinyläthers enthält, bei großer Selektivität eine sehr hohe und konstante Trennleistung aufweist, wobei die Trennleistung wesentlich höher ist als die der bekannten Membran.

Nach der Erfindung ist ferner vorgesehen, daß die Hydroxylgruppen einerseits und die Estergruppen bzw. die Äthergruppen andererseits im modifizierten Polyvinylalkohol- Makromolekül blockartig verteilt sind. Ein derartig beschaffener Polyvinylalkohol kann durch teilweise Spaltung eines Polyvinylesters oder eines Polyvinyläthers vorteilhaft hergestellt werden und besitzt nach seiner Verarbeitung zu einer Membran eine - im Vergleich zum bekannten Stand der Technik - extrem hohe Trennleistung.

In weiterer Ausgestaltung der Erfindung ist vorgesehen, daß bei der mehrschichtigen Membran die Trägerschicht eine Dicke von 30 bis 500 µm, die poröse Stützschicht eine Dicke von 30 bis 200 µm und die Trennschicht eine Dicke von 0,5 bis 5 µm hat. Eine derartig beschaffene Membran hat besonders gute Gebrauchseigenschaften (hohe mechanische Festigkeit, nahezu konstante Trennleistung während des Dauerbetriebs).

Die der Erfindung zugrundeliegende Aufgabe wird ferner durch die Schaffung eines Verfahrens zur Herstellung der mehrschichtigen Membran gelöst, bei dem aus der Trägerschicht und der porösen Stützschicht ein Verbundmaterial hergestellt wird, bei dem anschließend auf die Stützschicht des Verbundmaterials eine Lösung aufgebracht wird, die aus Wasser und 1 bis 10 Gew.-% Polyvinylalkohol besteht, wobei der Polyvinylalkohol mit 5 bis 20 Gew.-% eines Polyvinylesters oder eines Polyvinyläthers modifiziert ist, und die vor ihrer Verwendung 3 bis 20 Tage bei -10 bis +20°C, vorzugsweise +5 bis +10°C, gelagert wird, und bei dem schließlich das mit der wäßrigen Lösung beschichtete Verbundmaterial bei 100-180°C während einer Zeit von 1 bis 60 Minuten behandelt wird. Die guten Eigenschaften der nach diesem Verfahren hergestellten Membran werden auf das synergistische Zusammenwirken des Alterungsprozesses und des im Polyvinylalkohol enthaltenen Polyvinylesters bzw. Polyvinyläthers zurückgeführt.

In weiterer Ausgestaltung der Erfindung ist vorgesehen, daß die wäßrige Polyvinylalkohol-Lösung vor der Lagerung ein Molekulargewicht von 50.000 bis 1.000.000 Dalton aufweist. Hierdurch wird erreicht, daß die Trennschicht insbesondere eine gute mechanische Festigkeit erhält.

In weiterer Ausgestaltung der Erfindung ist vorgesehen, daß die auf das Verbundmaterial aufgebrachte Lösung des modifizierten Polyvinylalkohols durch Verdünnen einer konzentrierten Lösung des modifizierten Polyvinylalkohols mit Wasser hergestellt wird, die aus Wasser und 10 bis 30 Gew.-% des modifizierten Polyvinylalkohols besteht, wobei der Polyvinylalkohol mit 5 bis 20 Gew.-% eines Polyvinylesters oder eines Polyvinyläthers modifiziert ist, und die vor dem Verdünnen 3 bis 20 Tage bei -10 bis +20°C, vorzugsweise 5 bis 10°C, gelagert wird. Überraschenderweise wurde festgestellt, daß der positive Einfluß der Langzeitlagerung auf die Eigenschaften der Trennschicht auch dann erreicht wird, wenn eine konzentrierte wäßrige Lösung eines mit einem Polyvinylester oder Polyvinyläther modifizierten Polyvinylalkohols während 3 bis 20 Tage bei -10 bis +20°C gelagert und erst unmittelbar vor dem Aufbringen auf das Verbundmaterial auf eine Konzentration von 1 bis 10 Gew.-% des modifizierten Polyvinylalkohols verdünnt wird.

Nach der Erfindung ist es zweckmäßig, wenn der wäßrigen Lösung des modifizierten Polyvinylalkohols unmittelbar vor dem Aufbringen auf das Verbundmaterial 0,01 bis 0,1 Gew.-% eines Netzmittels zugegeben werden. Hierdurch wird eine gute, gleichmäßige Benetzung der porösen Stützschicht erreicht.

Nach der Erfindung ist auch vorgesehen, daß der wäßrigen Lösung des modifizierten Polyvinylalkohols unmittelbar vor dem Aufbringen auf das Verbundmaterial 1 bis 10 Gew.-% eines Vernetzungsmittels, bezogen auf den Polyvinylalkoholgehalt der Lösung, zugesetzt werden. Durch diese an sich bekannte Maßnahme wird erreicht, daß die Eigenschaften der Trennschicht variiert und speziellen Trennproblemen angepaßt werden können. Als Vernetzungsmittel können z.B. di- oder multifunktionelle Carbonsäuren, Aldehyde oder Halogenkohlenwasserstoffe verwendet werden.

Nach der Erfindung hat es sich in einigen Fällen als vorteilhaft erwiesen, wenn das beschichtete Verbundmaterial vor der Temperaturbehandlung mit Mikrowellen bestrahlt wird. Hierdurch erfolgt eine vergleichsweise schnelle Trocknung der Trennschicht, so daß die Wirkung der nachfolgenden Temperaturbehandlung, die insbesondere in der gleichmäßigen Ausbildung einer geordneten Struktur besteht, nicht durch die Verdampfung des Wassers aus der Trennschicht beeinträchtigt wird.

Zur Vermeidung von Poren innerhalb der Trennschicht ist es vorteilhaft, die Trennschicht in mehreren Teilschritten (Aufbringen der Lösung und thermische Behandlung ist jeweils ein Teilschritt) zu erzeugen. Es hat sich überraschenderweise gezeigt, daß die in Teilschritten erzeugten Trennschichten keine inneren Grenzflächen aufweisen.

Besonders leistungsfähige Trennschichten werden erhalten, wenn nach der Erfindung als Polyvinylester Polyvinylacetat und als Polyvinyläther Polyvinylisobutyläther verwendet werden. Der Polyvinylalkohol, der einen Gehalt eines Polyvinylesters oder eines Polyvinyläthers von 5 bis 20 Gew.-% aufweist, wird nach der Erfindung durch eine teilweise alkalische Verseifung eines Polyvinylesters oder durch eine teilweise saure Spaltung eines Polyvinyläthers hergestellt.

Die erfindungsgemäße mehrschichtige Membran kann besonders vorteilhaft zur Trennung flüssiger, dampf- und gasförmiger Stoffgemische verwendet werden. Während des Langzeiteinsatzes dieser Membran kommt es nicht zu einem nachteiligen Abfall der Trennleistung, und die mechanischen Eigenschaften der Membran bleiben auch im Dauerbetrieb erhalten. Die Membran hat sich bei Pervaporationsverfahren besonders gut bewährt.

Der Gegenstand der Erfindung wird nachfolgend anhand eines Ausführungsbeispiels näher erläutert.

Aus Polyvinylacetat wird durch teilweise Verseifung ein modifizierter Polyvinylalkohol hergestellt, der 8 Gew.-% Polyvinylacetat enthält und ein Molekulargewicht von ca. 100.000 Dalton hat. Aus diesem modifizierten Polyvinylalkohol wird eine 15%ige wäßrige Lösung hergestellt, die 14 Tage bei einer Temperatur von +10°C gelagert wird. Danach wird diese Lösung mit Wasser verdünnt, so daß sie 5 Gew.-% des modifizierten Polyvinylalkohols enthält. Gleichzeitig mit der Zugabe von Wasser werden 0,1 Gew.-% eines Netzmittels sowie 4 Gew.-% 1,3-Dichlorpropanol zugegeben. Diese Lösung wird auf einen Verbundkörper aufgebracht, dessen Stützschicht aus Polyacrylnitril und dessen Trägerschicht aus einem Polyestergewebe besteht.

Die Trennschicht wird bei 140°C während 30 min. getrocknet; nach dem Trocknungsvorgang hat sie eine Dicke von ca. 2 µm. Diese Membran wird zur Trennung verschiedener Stoffgemische eingesetzt.

Ein Stoffgemisch, das aus 90 Gew.-% Äthanol und 10 Gew.-% Wasser besteht, wird bei 88°C und einem Permeatdruck von 10 mbar durch Pervaporation in seine Bestandteile getrennt. Das Wasser, das als Permeat durch die Membran hindurchtritt, hat einen Äthanolghalt von 1,2 Gew.-%, wobei ein Permeatfluß von 1,63 kg/m²· h erreicht wird. Die in dem Dokument EP-A-04 42 557 vorgeschlagene Membran erbringt bei gleichen Bedingungen einen Permeatfluß von 0,8 kg/m²· h, wobei das als Permeat durch die Membran hindurchtretende Wasser einen Äthanolgehalt von 0,3 Gew.-% hat. Die Trennleistung der erfindungsgemäßen Membran ist also signifikant höher als die der Membran nach der EP-A-0 442 557, wobei die Selektivität der erfindungsgemäßen Membran nur geringfügig schlechter ist als die Selektivität der genannten Vergleichs-Membran. Allerdings ist die Selektivität der erfindungsgemäßen Membran für die Durchführung eines Trennprozesses im technischen Maßstab immer noch sehr gut.

Ein Stoffgemisch, das aus 99 Gew.-% Butylacetat und 1 Gew.-% Wasser besteht, wird bei einer Temperatur von 88°C und einem Permeatdruck von 10 mbar durch Pervaporation in die Bestandteile getrennt. Das durch die Membran als Permeat hindurchtretende Wasser hat einen Butylacetatgehalt von < 1 Gew.-%, wobei ein Permeatfluß von 0,5 kg/m² · h erreicht wird.

Ein Stoffgemisch, das aus 99 Gew.-% Diäthyläther und 1 Gew.-% Wasser besteht, wird bei einer Temperatur von 88°C und einem Permeatdruck von 10 mbar durch Pervaporation in die Bestandteile zerlegt. Das durch die Membran als Permeat hindurchtretende Wasser hat einen Diäthyläthergehalt von < 1 Gew.-%, und es wird ein Permeatfluß von 0,2 kg/m²· h erreicht.

## Patentansprüche

1. Mehrschichtige Membran, zusammengesetzt aus einer Trägerschicht bestehend aus Polyamid-, Polyvinylidendifluorid-, Polyester- oder Glasfasern, einer porösen Stützschicht, bestehend aus Polysulfon, Polyimid, Polyvinylalkohol, Polyurethan, polyvinylidendifluorid, Polyäthersulfon, Polyacrylnitril oder Polyätherimid und einer Trennschicht, die aus einem modifizierten Polyvinylalkohol besteht und porenfrei ist, wobei der Polyvinylalkohol mit 5 bis 20 Gew.-% eines Polyvinylesters oder eines Polyvinyläthers modifiziert ist, wobei die Trennschicht hergestellt wird, indem man auf das Verbundmaterial von Trägerschicht und poröser Stützschicht eine 1 bis 10 gew.-%ige wäßrige Lösung des modifizierten Polyvinylalkohols aufbringt, die vor ihrer Verwendung 3 bis 20 Tage bei -10 bis +20°C gelagert wird.

2. Mehrschichtige Membran nach Anspruch 1, dadurch gekennzeichnet, daß die Hydroxylgruppen und die Estergruppen oder die Äthergruppen im Makromolekül des modifizierten Polyvinylalkohols blockartig verteilt sind.

3. Mehrschichtige Membran nach den Ansprüchen 1 bis 2, dadurch gekennzeichnet, daß die Trägerschicht eine Dicke von 30 bis 500 µm, die poröse Stützschicht eine Dicke von 30 bis 200 µm und die Trennschicht eine Dicke von 0,5 bis 5 µm hat.

4. Verfahren zur Herstellung der mehrschichtigen Membran nach den Ansprüchen 1 bis 3, wobei aus der Trägerschicht und der porösen Stützschicht ein Verbundmaterial hergestellt wird, daß auf die Stützschicht des Verbundmaterials eine Lösung aufgebracht wird, die aus Wasser und 1 bis 10 Gew.-% des modifizierten polyvinylalkohols besteht, der 5 bis 20 Gew.-% eines polyvinylesters oder eines Polyvinyläthers enthält, und die vor ihrer Verwendung 3 bis 20 Tage bei -10 bis +20°C gelagert wird, und daß das mit der wäßrigen Lösung des modifizierten Polyvinylalkohols beschichtete Verbundmaterial bei 100 bis 180°C während einer Zeit von 1 bis 60 min. behandelt wird.

5. Verfahren nach Anspruch 4, dadurch gekennzeichnet, daß die wäßrige Lösung des modifizierten Polyvinylalkohols bei +5 bis +10°C gelagert wird.

6. Verfahren nach Anspruch 4 bis 5, dadurch gekennzeichnet, daß die wäßrige Lösung des modifizierten Polyvinylalkohols vor der Lagerung ein Molekulargewicht von 50.000 bis 1.000.000 Dalton aufweist.

7. Verfahren nach den Ansprüchen 4 bis 6, dadurch gekennzeichnet, daß die auf das Verbundmaterial aufgebrachte wäßrige Lösung des modifizierten Polyvinylalkohols durch Verdünnen einer konzentrierten wäßrigen Lösung des modifizierten Polyvinylalkohols mit Wasser hergestellt wird, die 10 bis 30 Gew.-% des modifierten Polyvinylalkohols und Rest Wasser enthält und die vor dem Verdünnen 3 bis 20 Tage bei -10 bis +20°C gelagert wird.

8. Verfahren nach Anspruch 7, dadurch gekennzeichnet, daß die konzentrierte wäßrige Lösung des modifizierten Polyvinylalkohols vor dem Verdünnen bei +5 bis +10°C gelagert wird.

9. Verfahren nach den Ansprüchen 4 bis 8, dadurch gekennzeichnet, daß der wäßrigen Lösung des modifizierten Polyvinylalkohols unmittelbar vor dem Aufbringen auf das Verbundmaterial 0,01 bis 0,1 Gew.-% eines Netzmittels zugegeben werden.

10. Verfahren nach den Ansprüchen 4 bis 9, dadurch gekennzeichnet, daß der wäßrigen Lösung des modifizierten Polyvinylalkohols unmittelbar vor dem Aufbringen auf das Verbundmaterial 1 bis 10 Gew.-% eines Vernetzungsmittels, bezogen auf den Polyvinylalkoholgehalt der Lösung, zugesetzt werden.

11. Verfahren nach den Ansprüchen 4 bis 10, dadurch gekennzeichnet, daß das beschichtete Verbundmaterial vor der Temperaturbehandlung mit Mikrowellen bestrahlt wird.

12. Verfahren nach den Ansprüchen 4 bis 11, dadurch gekennzeichnet, daß die Trennschicht in mehreren Teilschritten erzeugt wird.

13. Verfahren nach den Ansprüchen 4 bis 12, dadurch gekennzeichnet, daß als Polyvinylester Polyvinylacetat und als Polyvinyläther Polyvinylisobutyläther verwendet wird.

14. Verfahren nach den Ansprüchen 4 bis 13, dadurch gekennzeichnet, daß der modifizierte Polyvinylalkohol durch teilweise alkalische Verseifung eines Polyvinylesters oder durch eine teilweise saure Spaltung eines Polyvinyläthers hergestellt wird.

## Claims

1. A multi-layer membrane, comprised of a carrier layer consisting of fibres of polyamide, polyvinylidene difluoride, polyester or glass, a porous supporting layer, consisting of polysulphone, polyimide, polyvinyl alcohol, polyurethane, polyvinylidene difluoride, polyether sulphone, polyacrylonitrile or polyether imide and a separating layer which consists of a modified polyvinyl alcohol and is pore-free, the polyvinyl alcohol being modified with 5 to 20% by weight of a polyvinyl ester or a polyvinyl ether, with the separating layer being produced by applying to the composite material consisting of the carrier layer and porous supporting layer a 1 to 10% by weight aqueous solution of the modified polyvinyl alcohol which has been stored for 3 to 20 days at -10 to +20°C before use.

2. A multi-layer membrane according to Claim 1, characterised in that the hydroxyl groups and the ester groups or the ether groups are distributed in blocks in the macromolecule of the modified polyvinyl alcohol.

3. A multi-layer membrane according to Claims 1 to 2, characterised in that the carrier layer has a thickness of 30 to 500 µm, the porous supporting layer has a thickness of 30 to 200 µm and the separating layer has a thickness of 0.5 to 5 µm.

4. A method for producing the multi-layer membrane according to Claims 1 to 3, in which a composite material is produced from the carrier layer and the porous supporting layer, a solution is applied to the supporting layer of the composite material which consists of water and 1 to 10% by weight of the modified polyvinyl alcohol, which contains 5 to 20% by weight of a polyvinyl ester or of a polyvinyl ether, and which has been stored for 3 to 20 days at -10 to +20°C before use, and that the composite material coated with the aqueous solution of the modified polyvinyl alcohol is treated at 100 to 180°C for a time of 1 to 60 minutes.

5. A method according to Claim 4, characterised in that the aqueous solution of the modified polyvinyl alcohol is stored at +5 to +10°C.

6. A method according to Claim 4 to 5, characterised in that the aqueous solution of the modified polyvinyl alcohol before storage has a molecular weight of 50,000 to 1,000,000 Dalton.

7. A method according to Claims 4 to 6, characterised in that the aqueous solution of the modified polyvinyl alcohol applied to the composite material is produced by diluting a concentrated aqueous solution of the modified polyvinyl alcohol with water which contains 10 to 30% by weight of the modified polyvinyl alcohol and remainder water and which has been stored for 3 to 20 days at -10 to +20°C before dilution.

8. A method according to Claim 7, characterised in that the concentrated aqueous solution of the modified polyvinyl alcohol is stored at +5 to +10°C before dilution.

9. A method according to Claims 4 to 8, characterised in that 0.01 to 0.1% by weight of a wetting agent is added to the aqueous solution of the modified polyvinyl alcohol immediately before application to the composite material.

10. A method according to Claims 4 to 9, characterised in that 1 to 10% by weight of a cross-linking agent, relative to the polyvinyl alcohol content of the solution, are added to the aqueous solution of the modified polyvinyl alcohol immediately before application to the composite material.

11. A method according to Claims 4 to 10, characterised in that the coated composite material is irradiated with microwaves before the temperature treatment.

12. A method according to Claims 4 to 11, characterised in that the separating layer is produced in a plurality of partial steps.

13. A method according to Claims 4 to 12, characterised in that polyvinyl acetate is used as the polyvinyl ester and polyvinyl isobutyl ether is used as the polyvinyl ether.

14. A method according to Claims 4 to 13, characterised in that the modified polyvinyl alcohol is produced by partly alkaline saponification of a polyvinyl ester or by partially acidic cleaving of a polyvinyl ether.

## Revendications

1. Membrane multicouche, composée d'une couche porteuse constituée de fibres de polyamide, de fibres de poly(fluorure de vinylidène), de fibres de polyester ou de fibres de verre, d'une couche de support poreuse, constituée de polysulfone, de polyimide, d'alcool polyvinylique, de polyuréthanne, de poly(fluorure de vinylidène), de polyéthersulfone, de polyacrylonitrile ou de polyétherimide, et d'une couche séparatrice, constituée d'un alcool polyvinylique modifié et non poreuse, l'alcool polyvinylique étant modifié par 5 à 20% en poids d'un polyester de vinyle ou d'un polyéther de vinyle, dans laquelle la couche séparatrice est fabriquée en déposant sur le matériau composite, formé par la couche porteuse et la couche de support poreuse, une solution aqueuse renfermant 1 à 10% en poids de l'alcool polyvinylique modifié, celle-ci étant mise au repos, avant son utilisation, pendant 3 à 20 jours à une température de -10 à +20°C.

2. Membrane multicouche selon la revendication 1, caractérisée en ce que les groupes hydroxyles et les groupes esters ou les groupes éthers sont distribués en blocs dans la macromolécule de l'alcool polyvinylique modifié.

3. Membrane multicouche selon les revendications 1 à 2, caractérisée en ce que la couche porteuse a une épaisseur de 30 à 500 µm, la couche de support poreuse une épaisseur de 30 à 200 µm et la couche séparatrice une épaisseur de 0,5 à 5 µm.

4. Procédé de fabrication de la membrane multicouche selon les revendications 1 à 3, dans lequel un matériau composite est fabriqué à partir de la couche porteuse et de la couche de support poreuse, une solution étant déposée sur la couche de support du matériau composite, cette solution consistant en eau et en 1 à 10% en poids de l'alcool polyvinylique modifié, qui renferme 5 à 20% en poids d'un polyester de vinyle ou d'un polyéther de vinyle, et étant mise au repos 3 à 20 jours à une température de -10 à +20°C avant son utilisation, le matériau composite revêtu de la solution aqueuse de l'alcool polyvinylique modifié étant traité à une température de 100 à 180°C pendant une durée de 1 à 60 mn.

5. Procédé selon la revendication 4, caractérisé en ce que la solution aqueuse de l'alcool polyvinylique modifié est mise au repos à une température de +5 à +10°C.

6. Procédé selon la revendication 5, caractérisé en ce que la solution aqueuse de l'alcool polyvinylique modifié présente avant sa mise au repos un poids moléculaire de 50.000 à 1.000.000 Dalton.

7. Procédé selon les revendications 4 à 6, caractérisé en ce que la solution aqueuse de l'alcool polyvinylique modifié déposée sur le matériau composite est préparée par dilution dans l'eau d'une solution aqueuse concentrée de l'alcool polyvinylique modifié, celle-ci renfermant 10 à 30% en poids de l'alcool polyvinylique modifié et le reste d'eau, et étant mise au repos pendant 3 à 20 jours entre -10 et +20°C avant sa dilution.

8. Procédé selon la revendication 7, caractérisé en ce que la solution aqueuse concentrée de l'alcool polyvinylique modifié est mise au repos à une température de +5 à +10°C avant sa dilution.

9. Procédé selon l'une des revendications 4 à 8, caractérisé en ce que l'on ajoute 0,01 à 0,1% en poids d'un agent mouillant à la solution aqueuse de l'alcool polyvinylique modifié immédiatement avant son dépôt sur le matériau composite.

10. Procédé selon l'une des revendications 4 à 9, caractérisé en ce que l'on ajoute 1 à 10% en poids d'un agent de réticulation, rapportés à la teneur en alcool polyvinylique de la solution, à la solution aqueuse de l'alcool polyvinylique modifié, immédiatement avant son dépôt sur le matériau composite.

11. Procédé selon l'une des revendications 4 à 10, caractérisé en ce que le matériau composite recouvert est exposé à des micro-ondes avant le traitement thermique.

12. Procédé selon l'une des revendications 4 à 11, caractérisé en ce que la couche séparatrice est produite en plusieurs étapes.

13. Procédé selon l'une des revendications 4 à 12, caractérisé en ce que l'on utilise le poly(acétate de vinyle) comme polyester de vinyle et l'éther polyvinylisobutylique comme poly(éther de vinyle).

14. Procédé selon les revendications 4 à 13, caractérisé en ce que l'alcool polyvinylique modifié est préparé par saponification alcaline partielle d'un poly(ester de vinyle) ou par hydrolyse acide partielle d'un polyéther de vinyle.
